# EUROPÄISCHE PATENTSCHRIFT

(11) **EP 0 474 017 B1**
(45) Veröffentlichungstag und Bekanntmachung des Hinweises auf die Patenterteilung: **01.06.1994**
(21) Anmeldenummer: 91113894.9
(22) Anmeldetag: 20.08.1991
(51) Int. Cl.: F15B 15/10, E05B 65/38, F16J 3/02

(54) **Pneumatisches Stellelement, insbesondere für Kraftfahrzeuge**
Pneumatic actuator, especially for vehicles
Vérin pneumatique, en particulier pour véhicules

(30) Priorität: 06.09.1990 DE 9012722 U
(43) Veröffentlichungstag der Anmeldung: 11.03.1992
(73) Patentinhaber: Hella KG Hueck & Co., 59552 Lippstadt (DE)
(72) Erfinder: Muschner, Andreas, W-4790 Paderborn (DE); Seipel, Arnold, W-4791 Haaren (DE); Brüggemeier, Heiner, W-4795 Delbrück (DE); Stümpel, Joseph, W-4799 Borchen (DE)

(56) Entgegenhaltungen:
- FR-A- 1 057 410
- US-A- 2 678 663

## Beschreibung

Die Erfindung betrifft ein pneumatisches Stellelement, insbesondere für Kraftfahrzeuge, mit einem mehrteiligen Gehäuse, das einen Anschlußstutzen für pneumatisches Medium aufweist, dessen erstes Gehäuseteil ein umlaufendes Bett zur Aufnahme eines umlaufenden Membranwulstes einer gummielastischen Membran aufweist und mit einer Stellstange, die an der Membran befestigt ist.

Derartige pneumatische Stellelemente sind bekannt und werden z. B. in pneumatischen Zentralverriegelungen von Kraftfahrzeugen verwendet. Das dortige Gehäuse ist üblicherweise zweiteilig ausgebildet, wobei zwischen den Gehäuseteilen der umlaufende Membranwulst der gummielastischen Membran angeordnet ist. Die beiden Gehäuseteile werden durch z. B. Schnappverbindungen miteinander verbunden, wobei durch das Verrasten der beiden Teile miteinander der umlaufende Membranwulst derart in das Bett des ersten Gehäuseteils eingedrückt wird, daß der zwischen einem oder beiden Gehäuseteilen und der Membran gebildete pneumatische Raum abgedichtet wird. Derartige pneumatische Stellelemente werden aufgrund der hohen zu fertigenden Stückzahlen in teil- oder vollautomatisierten Fertigungsabläufen montiert.

Das vorbekannte Stellelement weist jedoch Nachteile auf. Für die einwandfreie Funktion des Stellelementes ist es erforderlich, daß der durch die Membran und durch eines oder mehrere Gehäuseteile gebildetete pneumatische Raum gegen die Umgebung abgedichtet ist und nur über den Anschlußstutzen mit pneumatischem Medium versorgbar ist. Dazu ist es erforderlich, daß der Membranwulst ordnungsgemäß in dem Bett des ersten Gehäuseteils gelagert ist. Ist dies nicht der Fall, so ist die Abdichtung des pneumatischen Raums zwischen der Membran und den Gehäuseteilen nicht gewährleistet. Insbesondere bei der automatischen Fertigung derartiger Stellelemente kann es jedoch vorkommen, daß beim Einlegen des Membranwulstes in das Bett der Membranwulst z. B. verdreht wird oder neben das Bett gelegt wird. Anschließend kann ebenfalls, insbesondere bei der automatischen Fertigung, das zweite Gehäuseteil mit dem ersten Gehäuseteil verrastet werden, ohne daß dieser Fehler bemerkt wird. Insbesondere dann, wenn keine Endkontrolle des gefertigten pneumatischen Stellelementes vorgesehen ist, kann es somit passieren, daß funktionsgestörte oder funktionsunfähige pneumatische Stellelemente unbemerkt die Produktion verlassen und an die Anwender der Stellelemente ausgeliefert werden.

Demgemäß liegt der vorliegende Erfindung die Aufgabe zugrunde, auf einfache und kostengünstige Art und Weise die Prüfung der ordnungsgemäßen Lage des Membranwulstes im Bett während der Fertigung zu ermöglichen.

Diese Aufgabe wird erfindungsgemäß dadurch gelöst, daß das Bett eine umlaufende Rinne aufweist und daß ein Prüfstutzen für pneumatischen Unterdruck am ersten Gehäuseteil vorgesehen ist, der mediumleitend mit der Rinne verbunden ist.

Durch die erfindungsgemäß vorgesehene umlaufende Rinne des Bettes wird bei ordnungsgemäßer Lage des Membranwulstes im Bett zwischen dem Membranwulst und den Wandungen der Rinne ein Hohlraum gebildet, der gegen die Außenumgebung abgeschlossen ist. Dieser Hohlraum kann über den erfindungsgemäß vorgesehenen Prüfstutzen mit einem Unterdruck beaufschlagt werden. Bei ordnungsgemäßer Lage des Membranwulstes im Bett kann der zwischen den Wandungen der Rinne und dem Membranwulst aufgebaute Unterdruck nicht gegen den atmosphären Druck belüften.

Wenn andererseits der Membranwulst nicht ordnungsgemäß im Bett gelagert ist, dann kann der zwischen den Wandungen der Rinne und dem Membranwulst befindliche Unterdruck gegen die Außenatmosphäre belüften, was durch geeignete Meßmittel oder einfach durch Abhören des Geräusches, wenn Luft gezogen wird, kontrollierbar ist.

Mit der erfindungsgemäßen Lösung ist also eine einfache und kostengünstige Prüfung der ordnungsgemäßen Lage des Membranwulstes im Bett möglich. Diese Prüfung kann während der laufenden Fertigung, insbesondere auch mit Hilfe automatisierter Meßvorgänge, während der laufenden automatisierten Fertigung erfolgen, so daß die pneumatischen Stellelemente, bei denen der Membranwulst nicht ordnungsgemäß im Bett liegt, frühzeitig ausgesondert werden können.

Durch die erfindungsgemäße Anwendung von Unterdruck auf der Bettseite des Membranwulstes kann sich zusätzlich eine Montagehilfe ergeben, derart, daß nur unvollständig in das Bett eingesetzte Membranwülste durch den Unterdruck in der Rinne vollständig in das Bett hineingezogen werden und insofern der vorher bestehende Fehler beseitigt wird.

Vorteilhafte Ausgestaltungen und Weiterbildungen des erfindungsgemäßen pneumatischen Stellelementes ergeben sich aus den Unteransprüchen.

Es ist besonders vorteilhaft, wenn die Rinne am Boden des Bettes angeordnet ist, da mit dieser Maßnahme bei Anwendung des Unterdrucks zu Prüfzwecken geringe Unterdruckverluste zu erwarten sind, wenn der Membranwulst ordnungsgemäß im Bett liegt. Zudem ist aufgrund der Abdichtung der Gehäuseteile miteinander und mit der Membran zwischen den Gehäuseteilen die ordnungsgemäße Lage des Membranwulstes auf dem Boden des Bettes von besonderer Wichtigkeit.

Zur Vermeidung von Vertauschungen des Anschlußstutzens und des Prüfstutzens sowohl bei der Herstellung und Montage des erfindungsgemäßen Stellelementes als auch bei der Montage des pneumatischen Stellelementes als Teil, z. B. einer pneumatischer Zentralverriegelung im Kraftfahrzeug, ist es besonders vorteilhaft, wenn der Anschlußstutzen auf der dem Prüfstutzen gegenüberliegenden Seite des Gehäuses angeordnet ist.

Um bei der beschriebenen Prüfung des ordnungsgemäßen Sitzes des Membranwulstes im Bett ein teilweises und vollständiges Hereinziehen des gummielastischen Materials des Membranwulstes in die Rinne zu vermeiden, ist es besonders vorteilhaft, wenn die Breite der Rinne kleiner ist als die Breite oder die Höhe des Bettes. In diesem Zusammenhang hat es sich als praxisgerecht erwiesen, wenn die Breite der Rinne etwa 1/3 der Breite oder Höhe des Bettes beträgt.

Es ist weiterhin vorteilhaft, wenn das Bett einen in etwa rechteckförmigen, insbesondere einen in etwa quadratischen Querschnitt aufweist, da sich durch diese Maßnahme beim Verrasten der beiden Gehäuseteile breite gegenüberliegende Dichtflächen ergeben. Zudem wird durch diese Maßnahme eine gute Ausfüllung des Bettes durch den Wulst der Membran gewährleistet.

Es ist besonders vorteilhaft, wenn die Rinne einen in etwa halbkreisförmigen Querschnitt aufweist, da in diesem Fall, insbesondere bei der Fertigung der Gehäuseteile aus Kunststoff, einfache Spritzwerkzeuge verwendet werden können. In diesem Fall ist das jeweilige Gehäuseteil einfach aus dem Werkzeug entformbar. Zudem ist für die Prüfung der ordnungsgemäßen Lage des Membranwulstes in dem Bett allein die wirksame Fläche zwischen dem Membranwulst und der Rinne von Bedeutung.

Ein Ausführungsbeispiel des erfindungsgemäßen pneumatischen Stellelementes ist in den Zeichnungen dargestellt und wird im folgenden anhand der Zeichnungen näher erläutert.

Es zeigen
Figur 1 ein erfindungsgemäßes pneumatisches Stellelement in einem Schnitt durch die Mittelachse,
Figur 2 eine Ansicht auf das erste Gehäuseteil des pneumatischen Stellelements gemäß Figur 1 von der Seite des Bettes her und
Figur 3 einen Schnitt durch das erste Gehäuseteil gemäß Figur 2 im Bereich des Prüfstutzens gemäß der in Figur 2 dargestellten Schnittlinie A-A.

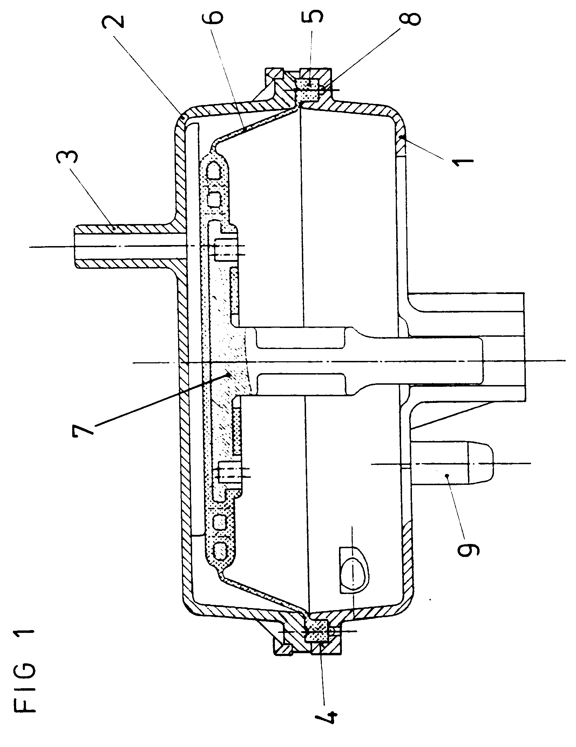

In Figur 1 weist das pneumatische Stellelement ein erstes Gehäuseteil 1 und ein zweites Gehäuseteil 2 auf, die mittels geeigneter Rastmittel miteinander verrastet sind. Am zweiten Gehäuseteil 2 ist ein Anschlußstutzen 3 für die Zuführung pneumatischen Mediums der sowohl pneumatischer Überdruck als auch pneumatischer Unterdruck sein kann, auf.

Das erste Gehäuseteil (1) weist ein umlaufendes Bett 4 in etwa quadratischen Querschnitts auf, in dem ein umlaufender Membranwulst 5 mit entsprechend angepaßtem in etwa quadratischen Querschnitt angeordnet ist. Der Membranwulst 5 ist einstückig mit einer gummielastischen Membran 6 gestaltet, in die eine Stellstange 7 eingeknüpft ist.

Das umlaufende Bett 4 des ersten Gehäuseteils 1 weist eine umlaufende Rinne 8 auf, die mediumleitend mit einem Prüfstutzen 9 für pneumatischen Unterdruck am ersten Gehäuseteil 1 verbunden ist.

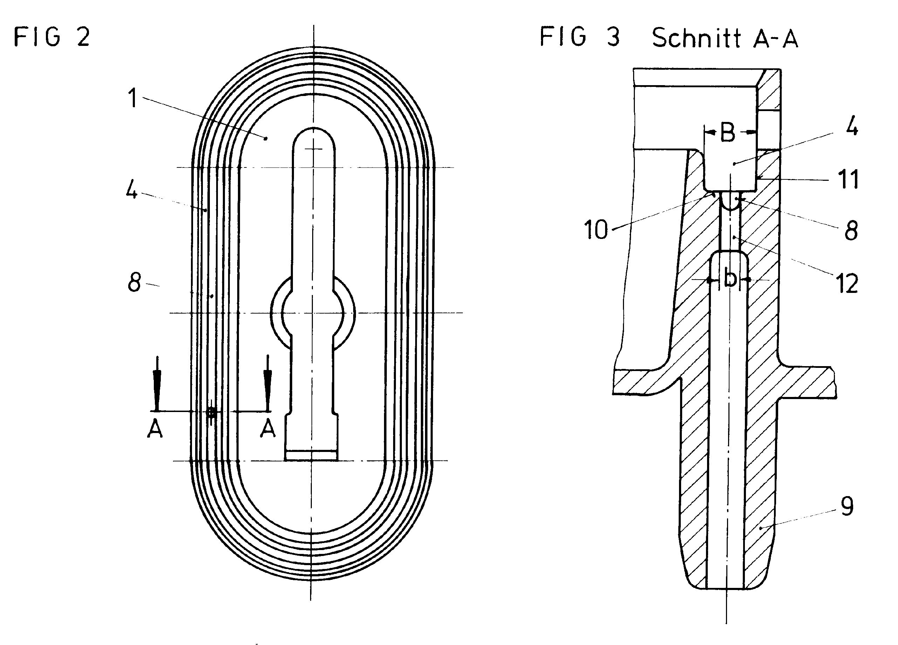

In Figur 2 sind gleiche oder gleichwirkende Einrichtungsteile wie in Figur 1 mit den gleichen Bezugszeichen versehen. Man erkennt hier besonders deutlich, daß sowohl das Bett 4 als auch die Rinne 8 umlaufend am Rand des ersten Gehäuseteils 1 ausgebildet sind und daß im Bereich der Schnittlinie A-A in der umlaufenden Rinne 8 eine Bohrung zur mediumleitenden Verbindung der umlaufenden Rinne 8 mit dem Prüfstutzen 9 vorgesehen ist.

In Figur 3 sind gleiche oder gleichwirkende Einrichtungsteile wie in den Figuren 1 und 2 mit den gleichen Bezugszeichen versehen. Man erkennt hier besonders deutlich, daß die Rinne 8 am Boden 10 des Bettes 4 angeordnet ist. Grundsätzlich ist auch die Anordnung der Rinne 8 an einer Seite 11 des Bettes 4 möglich. Weiterhin ist in dieser Figur deutlich ein Kanal 12 zur mediumleitenden Verbindung des Prüfstutzens 9 mit der Rinne 8 erkennbar.

Die Breite b der Rinne 8 ist dabei derart gewählt, daß sie etwa 1/3 der Breite B des Bettes 4 ausmacht, um im Falle der Beaufschlagung der Rinne 8 mit pneumatischen Unterdruck ein Hereinziehen des gummielastischen Materials des Membranwulstes 5 aus dem Bett 4 in die Rinne 8 zu vermeiden. Die Anordnung der Rinne 8 am Boden 10 des Bettes 4 gewährleistet die Prüfung der ordnungsgemäßen Lage des Membranwulstes 5 an der Stelle, die für die Herstellung der erforderlichen Abdichtung zwischen dem ersten Gehäuseteil 1 und dem zweiten Gehäuseteil 2 durch den Membranwulst 5 von besonderer Bedeutung ist.

Bei der Fertigung des pneumatischen Stellelementes gemäß den Figuren 1 bis 3 wird zuerst die gummielastische Membran 6 gemeinsam mit der Stellstange 7 derart in das erste Gehäuseteil 1 eingeschoben, daß der Membranwulst 5 in das umlaufende Bett 4 eingelegt wird. Dann wird der Prüfstutzen 9 und damit über den Kanal 12 die Rinne 8 mit Unterdruck beaufschlagt. Abhängig davon, welcher Unterdruck zwischen dem Membranwulst 5 und der Rinne 8 aufgebaut wird, kann beurteilt werden, ob der Membranwulst 5 ordnungsgemäß in dem umlaufenden Bett 4 liegt oder nicht. Liegt der Membranwulst 5 nicht ordnungsgemäß in dem Bett 4, so wird das soweit montierte Teil aus dem weiteren Montageprozeß ausgeschieden.

Liegt der Membranwulst 5 ordnungsgemäß in dem Bett 4, so daß sich ein wesentlich höherer Unterdruck in der Rinne 8 aufbauen kann, so wird als letztes das zweite Gehäuseteil 2 auf das erste Gehäuseteil (1) derart aufgesetzt, daß das erste Gehäuseteil 1 mit dem zweiten Gehäuseteil 2 verrastet und der Membranwulst 5 zwischen den beiden Gehäuseteilen 1 und 2 eingeklemmt wird.

## Patentansprüche

1. Pneumatisches Stellelement, insbesondere für Kraftfahrzeuge, mit einem mehrteiligen Gehäuse (1,2), das einen Anschlußstutzen (3) für pneumatisches Medium aufweist, dessen erstes Gehäuseteil (1) ein umlaufendes Bett (4) zur Aufnahme eines umlaufenden Membranwulstes (5) einer gummielastischen Membran (6) aufweist und mit einer Stellstange (7), die an der Membran (6) befestigt ist, dadurch gekennzeichnet, daß das Bett (4) eine umlaufende Rinne (8) aufweist und daß ein Prüfstutzen (9) für pneumatischen Unterdruck am ersten Gehäuseteil (1) vorgesehen ist, der mediumleitend mit der Rinne (8) verbunden ist.

2. Pneumatisches Stellelement nach Anspruch 1, dadurch gekennzeichnet, daß die Rinne (8) am Boden (10) des Bettes (4) angeordnet ist.

3. Pneumatisches Stellelement nach Anspruch 1, dadurch gekennzeichnet, daß der Anschlußstutzen (3) auf der dem Prüfstutzen (9) gegenüberliegenden Seite des Gehäuses (1, 2) angeordnet ist.

4. Pneumatisches Stellelement nach Anspruch 1, dadurch gekennzeichnet, daß die Breite (b) der Rinne (8) kleiner ist als die Breite (B) oder die Höhe des Bettes (4).

5. Pneumatisches Stellelement nach Anspruch 4, dadurch gekennzeichnet, daß die Breite (b) der Rinne (8) etwa 1/3 der Breite (B) oder der Höhe des Bettes (4) beträgt.

6. Pneumatisches Stellelement nach Anspruch 1, dadurch gekennzeichnet, daß das Bett (4) einen in etwa rechteckförmigen, insbesondere in etwa quadratischen Querschnitt aufweist.

7. Pneumatisches Stellelement nach Anspruch 1, dadurch gekennzeichnet, daß die Rinne (8) einen in etwa halbkreisförmigen Querschnitt aufweist.

## Claims

1. Pneumatic final controlling element, more particularly for motor vehicles, comprising a multi-part casing (1, 2) which incorporates an entry fitting (3) for pneumatic medium, of which the first casing part (1) incorporates a peripheral bed (4) to accommodate a peripheral diaphragm collar (5) of a rubbery diaphragm (6), and further comprising a final controlling bar (7) which is attached to the diaphragm (6), characterised in that the bed (4) incorporates a peripheral channel (8) and that provided on the first casing part (1) is an inspection fitting (9) for pneumatic low pressure, which is connected in medium-conducting manner to the channel (8).

2. Pneumatic final controlling element according to claim 1, characterised in that the channel (8) is disposed on the floor (10) of the bed (4).

3. Pneumatic final controlling element according to claim 1, characterised in that the entry fitting (3) is disposed on the side of the casing (1, 2) situated opposite the inspection fitting (9).

4. Pneumatic final controlling element according to claim 1, characterised in that the width (b) of the channel (8) is less than the width (B) or the height of the bed (4).

5. Pneumatic final controlling element according to claim 4, characterised in that the width (b) of the channel (8) is approximately one-third of the width (B) or of the height of the bed (4).

6. Pneumatic final controlling element according to claim 1, characterised in that the bed (4) is more or less rectangular in cross-section, in particular more or less square.

7. Pneumatic final controlling element according to claim 1, characterised in that the channel (8) is more or less semicircular in cross-section.

## Revendications

1. Vérin pneumatique, en particulier pour véhicules automobiles, comportant un boîtier (1, 2) en plusieurs parties qui présente un manchon (3) de raccordement pour un fluide pneumatique, dont la première partie de boîtier (1) présente une bride (4) périphérique pour recevoir un bourrelet de membrane (5) périphérique d'une membrane (6) élastique en caoutchouc, et une tige de vérin (7) qui est fixée à la membrane (6), caractérisé en ce que la bride (4) présente une rigole (8) périphérique et en ce qu'un manchon de contrôle (9) pour la dépression pneumatique est prévu sur la première partie du boîtier (1), manchon qui est relié à la rigole (8) de manière à conduire le fluide.

2. Vérin pneumatique selon la revendication 1, caractérisé en ce que la rigole (8) est agencée sur le fond (10) de la bride (4).

3. Vérin pneumatique selon la revendication 1, caractérisé en ce que le manchon de raccord (3) est agencé sur le côté du boîtier (1, 2) opposé au manchon de contrôle (9).

4. Vérin pneumatique selon la revendication 1, caractérisé en ce que la largeur (b) de la rigole (8) est plus petite que la largeur (B) ou la hauteur de la bride (4).

5. Vérin pneumatique selon la revendication 4, caractérisé en ce que la largeur (b) de la rigole (8) est approximativement un tiers de la largeur (B) ou de la hauteur de la bride (4).

6. Vérin pneumatique selon la revendication 1, caractérisé en ce que la bride (4) présente une section approximativement rectangulaire, en particulier approximativement carrée.

7. Vérin pneumatique selon la revendication 1, caractérisé en ce que la rigole (8) présente une section approximativement en forme de demi-cercle.
